# EUROPEAN PATENT SPECIFICATION

(11) **EP 2 912 555 B1**
(45) Date of publication and mention of the grant of the patent: **24.07.2019**
(21) Application number: 12887064.9
(22) Date of filing: 25.10.2012
(51) Int. Cl.: G06F 11/14, G06F 11/07, G06F 11/30, G06Q 20/00

(54) **HARD DRIVE BACKUP**
FESTPLATTENSICHERUNG
COPIE DE SAUVEGARDE DE DISQUE DUR

(43) Date of publication of application: 02.09.2015
(73) Proprietor: Hewlett-Packard Development Company, L.P., Spring TX 77389 (US)
(72) Inventor: BRETHAUER, Stephen M., Windsor, Colorado 80550 (US); THORLAND, Miles K., Fort Collins, Colorado 80528 (US)
(74) Representative: EIP
(86) International application number: PCT/US2012/061916
(87) International publication number: WO 2014/065803

(56) References cited:
- WO-A1-2007/076627
- KR-B1- 100 734 322
- US-A1- 2006 055 971
- US-A1- 2010 031 080
- US-A1- 2010 241 607
- US-A1- 2010 324 945
- US-A1- 2011 173 378
- US-A1- 2012 072 398
- US-A1- 2012 072 989

## Description

### Background

The failure of a hard drive can destroy data stored on the hard drive and may also cause down time of the system. A hard drive failure may occur when a hard drive malfunctions and the stored information cannot be accessed with a properly configured computer. A disk failure may occur in the course of normal operation, or due to an external factor such as exposure to environmental contamination, data recovery directly from a failed hard disk can be expensive if the data is even recoverable.

US patent application US 2006/055971 A1 discloses an image processing apparatus such as a digital multi-function peripheral having a storage device such as a hard disk drive.

US patent application 2010/0241607A1 discloses a system and method for the security and remote monitoring of computers.

US patent application 2011/0173378A1 discloses a solid-state mass storage device and method of anticipating a failure of the mass storage device.

### Summary

Aspects of the prevent invention are set out in the appended independent claims and variations are set out in the appended dependent claims.

### Brief Description Of The Drawings

Some embodiments of the invention are described with respect to the following figures:
Fig. 1 is a block diagram of a computing device according to an example implementation;
Fig. 2 is a block diagram of a computing system according to an example implementation;
Fig. 3 is a flow diagram of a computing system according to an example implementation;
Fig" 4 is a flow diagram of a method of generating a replacement hard drive for a computing device according to an example implementation;
Fig. 5 is a flow diagram of a method of generating a replacement hard drive for a computing device according to an example implementation; and
Fig. 6 is a computing device including a computer readable medium according to an example implementation.

### Detailed Description

In some systems hard drives are redundant, for example hard drives may be configured as a RAID (redundant array of identical hard drives) system, where if one hard drive fails it can be removed and replaced without data loss as the other hard drives have the same data. They system can also restore the data to a replacement hard drive once installed.

Portable systems are designed to be light and small relative to other systems such as desktop or all-in-one computers. Including a RAID system usually leads to the incorporation of at least two hard drives which may increase the weight and the size of a system. Portable systems are also prone to hard drive failures due, for example, to environmental issues such as dust, dirt, temperature, and impacts such as dropping the portable system and well as other causes of failure.

A portable system can include a network interface such as Ethernet or wireless. The network interface can connect the portable system to the internet or to a local area network (LAN). On the LAN or internet can be servers to back up data received from the portable system. In various examples, the servers may be utilized for back-up of the data, among others. The portable system can predict a hard drive failure though diagnostic data and utilize the network interface to request a replacement hard drive with the backed up data saved on the server. The hard drive may be restored and sent to the portable system to be installed in place of the hard drive that failed the diagnostic.

In one implementation a computing device can include a network interface to connect to a network. The network may also be a cloud service. A backup system can backup data to a server on the network. The backup data may be for example a duplicate copy of the data stored on the hard drive or data that can be used to restore the data on the hard drive. Some examples of backups are Unstructured, System Image, Incremental, Differential, Reverse Delta, and Continuous data protection. The data can be data stored on a hard drive. A hard drive diagnostic system can monitor the hard drive for indications of possible hard drive failure. If the hard drive diagnostic system indicates possible hard drive failure the network interface transmits a request for a replacement hard drive with the backup data stored on the server.

In another implementation a method of generating a replacement hard drive for a computing device includes backing up data on the computing device to a server on a network. An indication of possible hard drive failure on the computing device is diagnosed. The computing device can then request a replacement hard drive including backed up data prior to failure of the hard drive, if the diagnostics indicate a possible hard drive failure.

In another implementation, a non-transitory computer readable medium can include code that if executed by a processor in a computing device may cause the processor to backup data to a server on a network through a network interface. The processor may also diagnose an indication of possible hard drive failure. If the diagnostics indicate a possible hard drive failure the processor can request a replacement hard drive including backup data prior to failure of the hard drive.

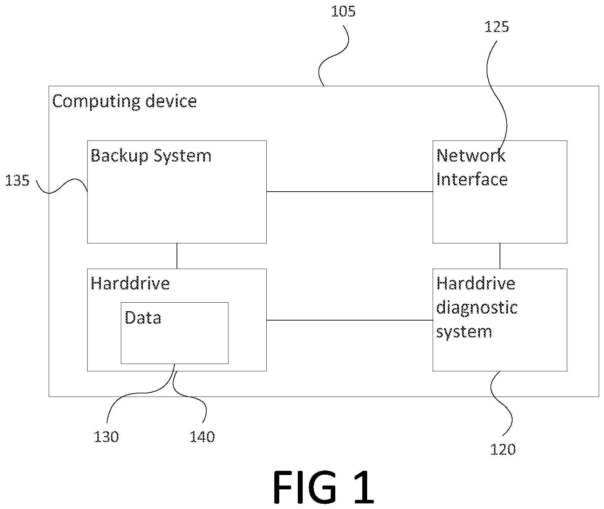

Referring to the figures, Fig. 1 is a block diagram of a computing device according to an example implementation. The computing device 105 includes a network interface 125 to connect to a network. The computing device 105 also includes a backup system 135 to backup data to a server on the network. The network may be a LAN or a WAN such as the internet. The computing device may back up data any time it is connected to the server through the network. If data is modified while the computing device is not connected to the server the data may be backed up to the server the next time the computer is connected to the server thought the network.

The backup system can determine what data 130 on the hard drive 140 gets backed up to the server. The data 130 may be operating system settings, applications, data such as a files used by applications, the operating system, or any other binary data that can be stored on the hard drive 140.

The computing device also includes a hard drive diagnostic system 120 to monitor the hard drive for indications of possible hard drive failure. The diagnostic system may use S.M.A.R.T. (Self-Monitoring, Analysis and Reporting Technology; often written as SMART) a monitoring system for computer hard disk drives to detect and report on various indicators of reliability, in the hope of anticipating failures.

Possible indicators of hard drive failure may include those listed in Table 1:

**Table 1**

| | |
|---|---|
| 1 | Read Error Rate |
| 2 | Throughput Performance |
| 3 | Spin-Up Time |
| 4 | Start/Stop Count |
| 5 | Reallocated Sectors Count |
| 6 | Read Channel Margin |
| 7 | Seek Error Rate |
| 8 | Seek Time Performance |
| 9 | Power-On Hours |
| 10 | Spin Retry Count |
| 11 | Recalibration Retries or Calibration Retry Count |
| 12 | Power Cycle Count |
| 13 | Soft Read Error Rate |
| 14 | Unused Reserved Block Count Total |
| 15 | SATA Downshift Error Count |
| 16 | End-to-End error |
| 17 | Head Stability |
| 18 | Induced Op-Vibration Detection |
| 19 | Reported Uncorrectable Errors |
| 20 | Command Timeout |
| 21 | High Fly Writes |
| 22 | Airflow Temperature Celsius |
| 23 | Temperature Difference |
| 24 | G-sense Error Rate |
| 25 | Power-off Retract Count or Emergency Retract Cycle Count |
| 26 | Load Cycle Count or Load/Unload Cycle Count |
| 27 | Temperature resp. Temperature Celsius |
| 28 | Hardware Error correct ion code (ECC) Recovered |
| 29 | Reallocation Event Count |
| 30 | Current Pending Sector Count |
| 31 | Uncorrectable Sector Count or Offline Uncorrectable or Off-Line Scan Uncorrectable Sector Count |
| 32 | UltraDMA (direct memory access) CRC Error Count |
| 33 | Multi-Zone Error Rate |
| 34 | Write Error Rate |
| 35 | Soft Read Error Rate or TA Counter Detected |
| 36 | Data Address Mark errors or TA Counter Increased |
| 37 | Run Out Cancel |
| 38 | Soft ECC Correction |
| 39 | Thermal Asperity Rate (TAR) |
| 40 | Flying Height |
| 41 | Spin High Current |
| 42 | Spin Buzz |
| 43 | Offline Seek Performance |
| 44 | Vibration During Write |
| 45 | Vibration During Write |
| 46 | Shock During Write |
| 47 | Disk Shift |
| 48 | G-Sense Error Rate |
| 49 | Loaded Hours |
| 50 | Load/Unload Retry Count |
| 51 | Load Friction |
| 52 | Load/Unload Cycle Count |
| 53 | Load 'In'-time |
| 54 | Torque Amplification Count |
| 55 | Power-Off Retract Cycle |
| 56 | Head Amplitude |
| 57 | Drive Life Protection Status |
| 58 | Temperature |
| 59 | SSD (solid state drive) Life Left |
| 60 | Endurance Remaining |
| 61 | Available Reserved Space |
| 62 | Power-On Hours |
| 63 | Media Wearout Indicator |
| 64 | Head Flying Hours |
| 65 | Transfer Error Rate |
| 66 | Total LBAs Written |
| 67 | Total LBAs Read |
| 68 | Read Error Retry Rate |
| 69 | Free Fall Protection |

The network interface 125 sends a request for a replacement hard drive, the replacement hard drive is to include the backup data that was backed up to the server. The diagnostic system or back up system may for example initiate the request for the replacement hard drive that is sent by the network interface. The request may be transmitted to the server on the network that backs up the data or to another server such as a server to handle procurement of the hard drive. The request for a replacement hard drive may include an indication of what data is to be stored on the replacement hard drive from the data that is backed up on the server, the type of drive, information about the operating system that is executing on the hard drive, shipping information for the replacement hard drive, payment information for the replacement hard drive. The type of hard drive used as the replacement hard drive may be the same type as the failing hard drive or may be upgraded. The operating system may be upgraded when data is stored on the replacement hard drive.

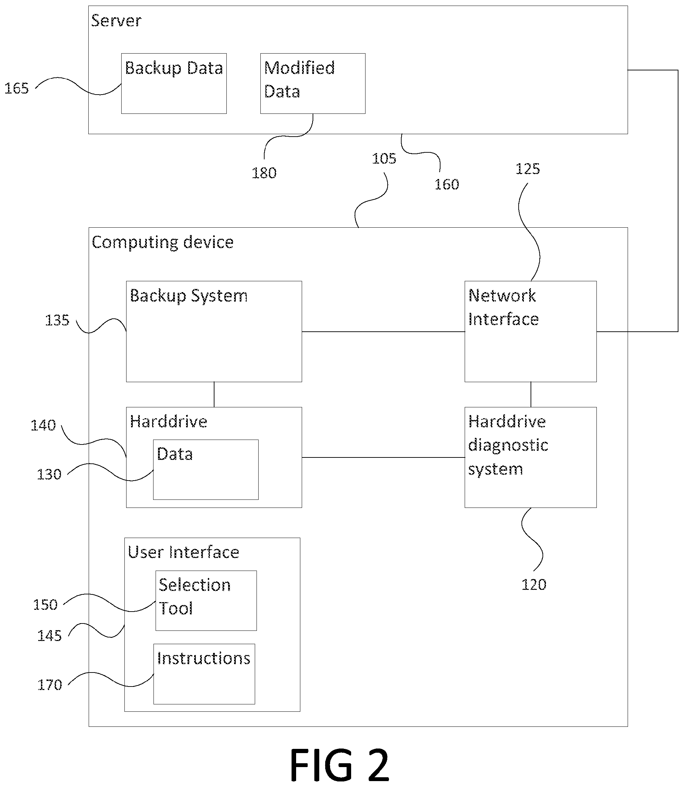

Fig. 2 is a block diagram of a computing system according to an example implementation. The network interface 125 of the computing device 105 is connected to the Server 160. The connection to the server 160 can be through a local area network (LAN) or a wide area network (WAN) such as the internet. The server can include the backup data 165.

The Computing device 105 may include a selection tool 150 to select whether to back up a portion of the data stored on the hard drive or the entire hard drive, in some cases the backup data 165 may be a full hard drive 140 back up including the operating system or the backup data 165 may include less than that full backup. For example any or all of the following may be backed operating system settings, applications, data such as a files used by applications, the operating system, or any other binary data that can be stored on the hard drive 140.

The selection tool 150 can be part of the user interface 145 presented to the user to make the selection. The user interface 145 may be code stored on the basic input output system (BIOS) storage so that the selection tool and the user interface are still available even if the computing device 105 becomes inoperable.

If the backup data does not include the operating system then when a replacement hard drive is requested the operating system for the replacement hard drive may be determined by the server. For example the server may have access to data that included the type of provided operating system that was included with the computing device. The provided operating system, provided applications, provided hard drive refer to an operating system, application or hard drive that was provided by the manufacture of the computing device. Alternatively the computing device may indicate to the server what the provided operating system was and what the current operating system is. The server may also include the provided unlock code that was supplied with the provided operating system and use that code when installing the provided operating system on the replacement hard drive, if the unlock code is not known by the server the user may have to activate the operating system upon receiving the replacement hard drive. The unlock codes for other applications may also be provided by the server or the user may have to input the unlock codes for the application after installing the replacement hard drive. The unlock code may be a unique code to the license to use the software such as the operating system or applications.

The user interface 145 may include instructions on replacing the hard drive. The instructions may have a step by step tutorial on how to replace the hard drive 140. In the computer has become inoperable due to hard drive failure the user may not be able to access the instructions on the internet for example therefore the instruction may be stored in a memory such as the BIOS that would not be effected should the hard drive 140 become inoperable.

In one implementation the computing device may continue operating after the replacement hard drive has been requested. A notification may indicate to a user that any changes to the data on the hard drive may not be on the replacement hard. If data is created or modified after the backup data is stored on the replacement hard drive then the replacement hard drive when received will not include the modified data 180. The modified data may include changes to files as well as new files or any other modifications to the backup data. After the replacement hard drive is installed in the computing device the computing device may determine that there is modified data on the backup server to be synchronized with the data on the computing device. A synchronization of data back to the computing device may be determined based on the time and date of the data on the computing device and the server.

The network interface receives data from the server modified since the backup data was stored on the replacement hard drive, in other words since the replacement hard drive was imaged with the backup data. Once the modified data is stored on the replacement hard drive the modified data 180 may be merged into the backup data 165 on the server. For example the modified data is backup data at a time after an even such as after the backup data has been stored on the replacement hard drive. The modified data once restored to the replacement hard drive may be merged with the backup data on the server. The modified data may be stored separately from the backup data, the modified data may be flagged, the modified data may be determined from a time stamp, may be determined by a data comparison or may be identified in another way. If for example the modified data was determined based on the time stamp, then the computing device or server would know what data is modified data that was not stored on the drive and the backup data that was stored on the drive. If the server knew that the data for the replacement hard drive was stored to the replacement hard drive on Jan 1 at 12 noon then any data received by the server after that time is modified data until that data is restored to the replacement hard drive.

The user interface 145 may be used by the user preauthorize a request for the replacement hard drive, If the hard drive is in warranty or has a service agreement that is valid payment may not be required to provide the replacement hard drive. The preauthorization may include payment information, selection of upgrades of the hard drive or software such as the operating system or applications. In one implementation the preauthorization may include a credit card number that is used to charge the replacement hard drive. There may also be a separate payment for storing the backup data to the replacement hard drive, payment for storing the backup data on the replacement hard drive may also be preauthorized. There may be a payment for the storage space on the server that is used for the backup data. The payment for example may be recurring, may be a onetime payment such as when the computing device is registered in a program to receive a replacement hard drive upon an indication that the hard drive may fail, or at another event. The amount of backup space on the server may also be determined by the size of the hard drive when the computing device is registered.

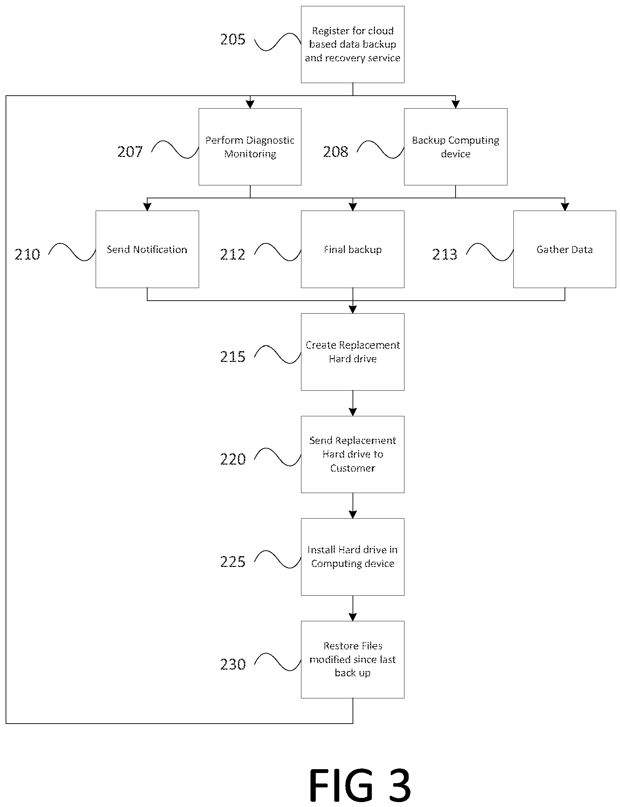

Fig. 3 is a flow diagram of a method according to an example implementation. The flow begins by customer registering for a cloud based data backup and recovery service at 205. This data backup system is set up regularly to backup data stored on the hard drive(s) which may include partition and OS information.

The computing device might have a hard drive that is broken, damaged or is in danger of failing which is determined by a hard drive diagnostic system at 207. If that hard drive has been regularly backed up to the cloud backup service, the backup service will be sent a notification that may include a diagnostic code provided by the diagnostic system that the customers hard drive has, or will soon fail at 210. The diagnostic code may be used by the computing system to determine that the hard drive is going to fail and the notification is to request the drive or the notification may be of the diagnostic code and the server receiving the diagnostic code may determine that the hard drive is going to fail and request a replacement hard drive.

A final back up can be run on the system at 212 which may be around the same time as the notification is sent at 210. This notification will trigger a service event by which the customer's failing hard drive data will be replicated on a replacement hard drive. There will be specific diagnostic condition that the diagnostic utility looks for that will be interpreted as an imminent or probable hard disk failure. When these diagnostic conditions occur, it is determined whether there have been any modifications to data on the hard drive since the last successful back up was performed. If there is modifications to the data a backup is attempted. As part of the notification to the server data may be gathered and provided to the server at 213. The gathered data may include, but is not limited to, the following; error code of the hard drive as determined by the diagnostic, hard drive manufacturer, hard drive model number, hard drive serial number, computing device model number, computing device serial number, computing device warranty status, operating system and third party software licenses and more.

The replacement hard drive can include the data backed up in the final back up at 212. The replacement hard drive is created at 215. The replacement hard drive can be created at a repair/fulfillment center. The repair/fulfillment center can receive the backup data to store on the hard drive. The customer can be sent the replacement hard drive including data up to the point of the last successful backup at 220.

The hard drive once received by the customer can be installed in the computing device at 225. The backup software on the replacement hard drive may check with the backup server to determine if there is modified data and perform a restore of that data to the replacement hard drive. Alternatively the replacement drive may include a restore application that is executed upon the first boot of the system with the replacement hard drive. The restore application can restore the modified data to the replacement hard drive and finalize the replacement. In some implementations a flag in the bios may indicate that the restore application needs to be executed upon booting the replacement hard drive. The computing device can then restore files to the hard drive that were modified and saved to the backup server since the final backup at 230. After the modified files are returned to the replacement hard drive from the backup server the method returns to making backup at 208 and performing diagnostics at 207.

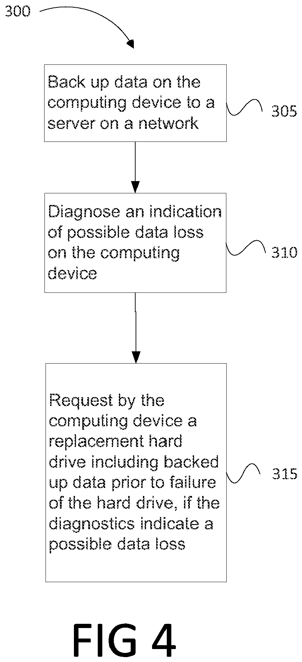

Fig. 4 is a flow diagram of a method of generating a replacement hard drive for a computing device according to an example implementation.

A method 300 of generating a replacement hard drive for a computing device can include backing up data on the computing device to a server on a network at 305.

A diagnostic can generate an indication of possible hard drive failure on the computing device at 310. The possible hard drive failure may be for example possible failure of the hard drive. The possible failure of the hard drive may be preprogrammed based on failure rates of hard drives. For example if the hard drive's spin up time has decreased passed a threshold the diagnostic may determine that the hard drive is failing and there is a possibility of hard drive failure.

The computing device can request a replacement hard drive including backed up data prior to failure of the hard drive, if the diagnostics indicate a possible hard drive failure at 315. The request may include data such as error code of the hard drive as determined by the diagnostic, hard drive manufacturer, hard drive model number, hard drive serial number, computing device model number, computing device serial number, computing device warranty status, operating system and third party software licenses and more.

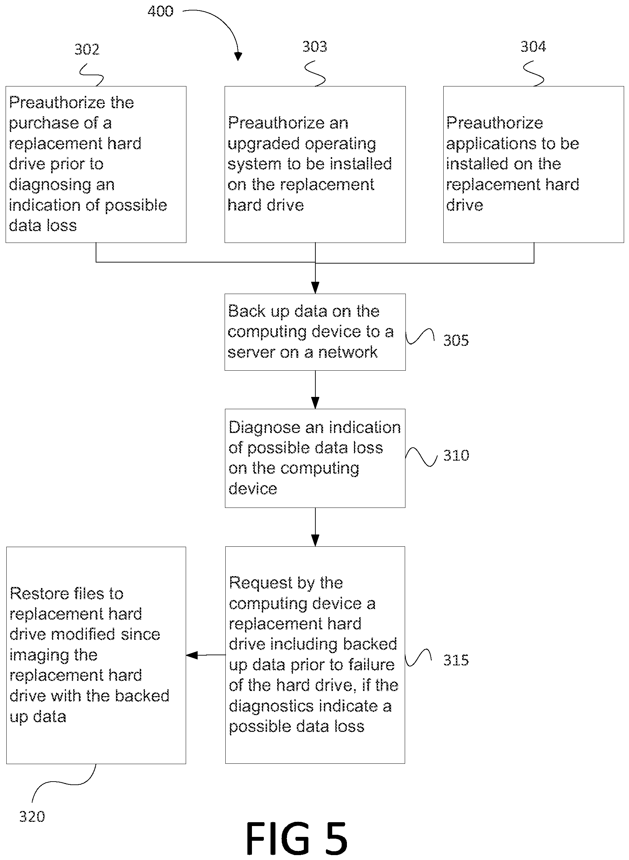

Fig. 5 is a flow diagram of a method of generating a replacement hard drive for a computing device according to an example implementation.

A method 400 of generating a replacement hard drive for a computing device can include preauthorizing the purchase of a replacement hard drive prior to diagnosing an indication of possible hard drive failure at 302. If the hard drive is still under warranty or under a trade service agreement the replacement hard drive may be provided without purchasing the replacement hard drive. The preauthorization may be for example payment information for a replacement hard drive in case the computing device or hard drive is out of warranty when the replacement hard drive is requested by the computing system. The preauthorization may include an upgrade to the hard drive should one be available, for example a higher capacity or faster hard drive than the hard drive that is in the computing device.

The method 400 may also include preauthorizing an upgrade to the operating system to be installed on the replacement hard drive at 303. For example if an upgraded version of the operating system or an operating system with additional feature than the provided operating system the computing device may be preauthorized by providing payment information for the operating system upgrade.

The method 400 may include preauthorizing applications to be installed on the replacement hard drive at 304. The preauthorized applications may be applications that are installed on the hard drive of the computing device. For example the applications may require unlock codes, the unlock codes may be provided before the replacement hard drive is requested allowing the hard drive to be replaced with all the software applications without having to install or unlock the software installed on the replacement hard drive once the replacement hard drive is installed in the computing device. The preauthorization of the applications at 304 may also include providing payment information for upgraded software such as an upgraded version of an application or an application version with additional features.

Data on the computing device is backed up to a server on a network at 305. A diagnostic can generate an indication of possible hard drive failure on the computing device at 310. The possible hard drive failure may be for example possible failure of the hard drive. The possible failure of the hard drive may be determined if diagnostic conditions exceed threshold levels that indicate the failure rates of hard drive has increase. For example if the hard drive's spin up time has decreased passed a threshold the diagnostic may determine that the hard drive is failing and there is a possibility of hard drive failure.

The computing device can request a replacement hard drive including backed up data prior to failure of the hard drive, if the diagnostics indicate a possible hard drive failure at 315. The request may include data such as error code of the hard drive as determined by the diagnostic, hard drive manufacturer, hard drive model number, hard drive serial number, computing device model number, computing device serial number, computing device warranty status, operating system and third party software licenses and more.

The files modified since imaging the replacement hard drive with the backed up data can be restored to a replacement hard drive at 320. If the computing device continues to operate after the replacement hard drive is requested the computing device continues to back up files however these files may not be on the replacement hard drive when received by the customer and have to be restored from the backup server once the replacement hard drive is installed in the computing device.

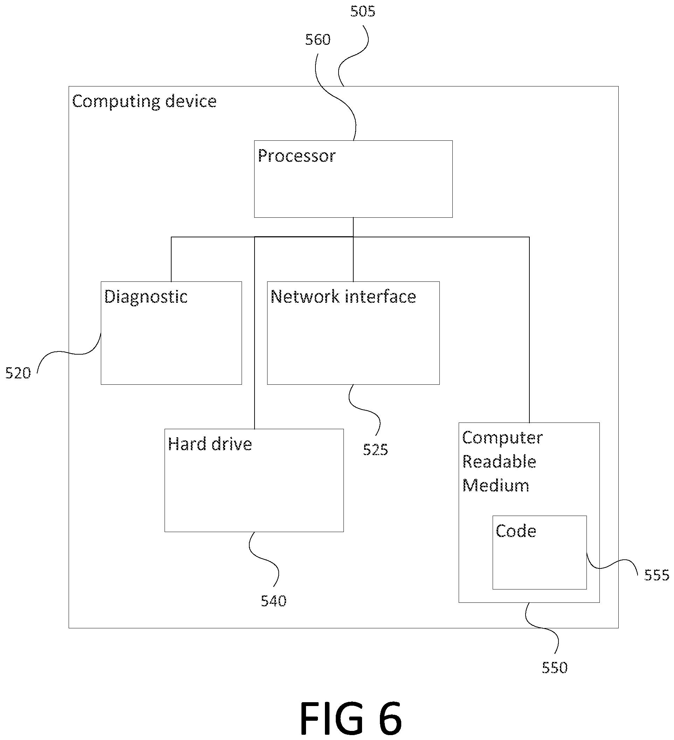

FIG. 6 is a computing device 505 including a non-transitory computer readable medium according to an example implementation.

The computer readable medium 550 can include code 555 that if executed by a processor 560 in a computing device causes the processor 560 to backup data to a server on a network through a network interface 525. The code 555 may also diagnose an indication of possible hard drive failure by a hard drive 540. The code may also cause the processor 560 to request a replacement hard drive including backup data prior to failure of the hard drive if the diagnostics indicates a possible hard drive failure.

The code 555 may include code that if executed by the processor preauthorizes the purchase of a replacement hard drive prior to diagnosing an indication of possible hard drive failure. Preauthorizing the purchase of the hard drive may include payment for a replacement hard drive.

The techniques described above may be embodied in a computer-readable medium for configuring a computing system to execute the method. The computer readable media may include, for example and without limitation, any number of the following non-transitive mediums: magnetic storage media including disk and tape storage media; optical storage media such as compact disk media (e.g., CD-ROM, CD-R, etc.) and digital video disk storage media; holographic memory; nonvolatile memory storage media including semiconductor-based memory units such as FLASH memory, EEPROM, EPROM, ROM; ferromagnetic digital memories; volatile storage media including registers, buffers or caches, main memory, RAM, etc.; and the Internet, just to name a few. Other new and various types of computer-readable media may be used to store the software modules discussed herein. Computing systems may be found in many forms including but not limited to mainframes, minicomputers, servers, workstations, personal computers, notepads, personal digital assistants, various wireless devices and embedded systems, just to name a few.

In the foregoing description, numerous details are set forth to provide an understanding of the present invention. However, it will be understood by those skilled in the art that the present invention may be practiced without these details. While the invention has been disclosed with respect to a limited number of embodiments, those skilled in the art will appreciate numerous modifications and variations therefrom.

## Claims

1. A computing device comprising:
a network interface (125) to connect to a network;
a backup system (135) to backup data stored on a hard drive to a server on the network;
a hard drive diagnostic system (120) to monitor the hard drive (140) for indications of possible hard drive failure;
wherein the network interface (125) is configured to transmit a request for a replacement hard drive including the data backed up on the server in response to the indications of possible hard drive failure; and
wherein, the network interface (125) is configured to receive files from the server modified since imaging the replacement hard drive with the backup data, and to restore the received files to the replacement hard drive.

2. The device of claim 1, further comprising a selection tool (150) to select whether to backup a portion of the data stored on the hard drive or the entire hard drive.

3. The device of claim 1, wherein the operating system for the replacement hard drive is determined by the server (160).

4. The device of claim 1, wherein the backup data (165) does not include the operating system.

5. The device of claim 1, further comprising a basic input output system (BIOS) including a user interface with instructions on replacing the hard drive (140).

6. The device of claim 1, further comprising a basic input output system (BIOS) including a user interface for a user to preauthorize a request for the replacement hard drive.

7. The device of claim 1, wherein the request is sent to file server (160) prior to hard drive failure.

8. A method (300) of generating a replacement hard drive for a computing device comprising:
backing up data on the computing device (305) to a server on a network; diagnosing an indication of possible hard drive failure on the computing device;
requesting by the computing device (310) a replacement hard drive including the data backed up on the server prior to failure of the hard drive, if the diagnostics indicate a possible hard drive failure and
receiving from the server and restoring to the replacement hard drive files modified since imaging the replacement hard drive with the backup data.

9. The method of claim 8, further comprising preauthorizing at least one of in warranty replacement hard drive, trade service agreement, replacement hard drive, or purchase of a replacement hard drive, prior to diagnosing an indication of possible hard drive failure.

10. The method of claim 9, further comprising preauthorizing an upgraded operating system (303) to be installed on the replacement hard drive.

11. The method of claim 9, further comprising preauthorizing applications (304) to be installed on the replacement hard drive.

12. A non-transitory computer readable medium (550) comprising code that if executed by a processor in a computing device causes the processor to:
backup data stored on a hard drive of the computing device to a server on a network through a network interface; diagnose an indication of possible hard drive failure;
request, if the diagnostics indicate possible hard drive failure, a replacement hard drive including the data backed up on the server prior to failure of the hard drive and receive from the server and restore to the replacement hard drive files modified since imaging the replacement hard drive with the backup data.

13. The computer readable medium of claim 12 further comprising code that if executed causes a computing device to:
preauthorize at least one of in warranty replacement hard drive, trade service agreement replacement hard drive and purchase of a replacement hard drive prior to diagnosing an indication of possible hard drive failure.

## Patentansprüche

1. Rechenvorrichtung, Folgendes umfassend:
eine Netzwerkschnittstelle (125) zum Verbinden mit einem Netzwerk;
ein Sicherungssystem (135) zum Sichern von auf einer Festplatte gespeicherten Daten auf einem Server in dem Netzwerk;
ein Festplattendiagnostiksystem (120) zum Überwachen der Festplatte (140) auf Anzeichen eines möglichen Festplattenausfalls;
wobei die Netzwerkschnittstelle (125) konfiguriert ist, um eine Anfrage nach einer Ersatzfestplatte einschließlich der auf dem Server gesicherten Daten als Reaktion auf die Anzeichen eines möglichen Festplattenausfalls zu übertragen; und
wobei die Netzwerkschnittstelle (125) konfiguriert ist, um Dateien von dem Server zu empfangen, die seit dem Abbilden der Ersatzfestplatte mit den Sicherungsdaten modifiziert wurden, und um die empfangenen Dateien auf der Ersatzfestplatte wiederherzustellen.

2. Vorrichtung nach Anspruch 1, ferner ein Auswahlwerkzeug (150) umfassend, um auszuwählen, ob ein Abschnitt der auf der Festplatte gespeicherten Daten oder die gesamte Festplatte gesichert wird.

3. Vorrichtung nach Anspruch 1, wobei das Betriebssystem für die Ersatzfestplatte durch den Server (160) bestimmt wird.

4. Vorrichtung nach Anspruch 1, wobei die Sicherungsdaten (165) nicht das Betriebssystem einschließen.

5. Vorrichtung nach Anspruch 1, ferner ein grundlegendes Ein-Ausgabe-System (*basic input output system* - BIOS) umfassend, einschließlich einer Benutzeroberfläche mit Anweisungen zum Ersetzen der Festplatte (140).

6. Vorrichtung nach Anspruch 1, ferner ein grundlegendes Ein-Ausgabe-System (BIOS) umfassend, einschließlich einer Benutzeroberfläche für einen Benutzer, um eine Anfrage zum Ersetzen der Festplatte zu vorautorisieren.

7. Vorrichtung nach Anspruch 1, wobei die Anfrage an einen Dateiserver (160) vor dem Festplattenausfall gesendet wird.

8. Verfahren (300) zum Erzeugen einer Ersatzfestplatte für eine Rechenvorrichtung, Folgendes umfassend:
Sichern von Daten auf der Rechenvorrichtung (305) auf einem Server in einem Netzwerk; Diagnostizieren eines Anzeichens eines möglichen Festplattenausfalls auf der Rechenvorrichtung;
Anfordern einer Ersatzfestplatte einschließlich der auf dem Server gesicherten Daten durch die Rechenvorrichtung (310) vor dem Festplattenausfall, wenn die Diagnostik ein Anzeichen eines möglichen Festplattenausfalls zeigt, und
Empfangen von Dateien von dem Server und Wiederherstellen dieser auf der Ersatzfestplatte, die seit dem Abbilden der Ersatzfestplatte mit den Sicherungsdaten modifiziert wurden.

9. Verfahren nach Anspruch 8, ferner umfassend das Vorautorisieren einer Ersatzfestplatte in einer Gewährleistung, einer Handelsdienstleistungsvereinbarung, einer Ersatzfestplatte und/oder eines Kaufs einer Ersatzfestplatte vor dem Diagnostizieren eines Anzeichens eines möglichen Festplattenausfalls.

10. Verfahren nach Anspruch 9, ferner umfassend das Vorautorisieren eines aufgerüsteten Betriebssystems (303), das auf der Ersatzfestplatte installiert werden soll.

11. Verfahren nach Anspruch 9, ferner umfassend das Vorautorisieren von Anwendungen (304), die auf der Ersatzfestplatte installiert werden sollen.

12. Nichtflüchtiges computerlesbares Medium (550), einen Code umfassend, der, bei einem Ausführen durch einen Prozessor in einer Rechenvorrichtung den Prozessor zu Folgendem veranlasst:
Sichern von auf einer Festplatte der Rechenvorrichtung gespeicherten Daten auf einem Server in einem Netzwerk durch eine Netzwerkschnittstelle;
Diagnose eines Anzeichens eines möglichen Festplattenausfalls;
Anfordern einer Ersatzfestplatte, einschließlich der auf dem Server gesicherten Daten vor dem Festplattenausfall, wenn die Diagnostik ein Anzeichen eines möglichen Festplattenausfalls zeigt, und
Empfangen von Dateien von dem Server und Wiederherstellen dieser auf der Ersatzfestplatte, die seit dem Abbilden der Ersatzfestplatte mit den Sicherungsdaten modifiziert wurden.

13. Computerlesbares Medium nach Anspruch 12, ferner einen Code umfassend, der bei Ausführung eine Rechenvorrichtung zu Folgendem veranlasst:
Vorautorisieren einer Ersatzfestplatte in einer Gewährleistung, einer Handelsdienstleistungsvereinbarung, einer Ersatzfestplatte und/oder eines Kaufs einer Ersatzfestplatte vor dem Diagnostizieren eines Anzeichens eines möglichen Festplattenausfalls.

## Revendications

1. Dispositif informatique comprenant :
une interface réseau (125) pour se connecter à un réseau ;
un système de sauvegarde (135) pour sauvegarder des données stockées sur un disque dur sur un serveur du réseau ;
un système de diagnostic de disque dur (120) pour surveiller le disque dur (140) à la recherche d'indications d'une défaillance possible de disque dur ;
l'interface réseau (125) étant configurée pour transmettre une demande de disque dur de remplacement incluant les données sauvegardées sur le serveur en réponse aux indications d'une défaillance possible de disque dur ; et
l'interface réseau (125) étant configurée pour recevoir des fichiers en provenance du serveur modifiés depuis la création d'une image du disque dur de remplacement avec les données de sauvegarde, et pour restaurer les fichiers reçus sur le disque dur de remplacement.

2. Dispositif selon la revendication 1, comprenant en outre un outil de sélection (150) pour choisir de sauvegarder une partie des données stockées sur le disque dur ou l'intégralité sur le disque dur.

3. Dispositif selon la revendication 1, dans lequel le système d'exploitation du disque dur de remplacement est déterminé par le serveur (160).

4. Dispositif selon la revendication 1, dans lequel les données de sauvegarde (165) n'incluent pas le système d'exploitation.

5. Dispositif selon la revendication 1, comprenant en outre un système de base d'entrée-sortie (BIOS) incluant une interface utilisateur avec des instructions concernant le remplacement du disque dur (140).

6. Dispositif selon la revendication 1, comprenant en outre un système de base d'entrée-sortie (BIOS) incluant une interface utilisateur permettant à un utilisateur de préautoriser une demande de disque dur de remplacement.

7. Dispositif selon la revendication 1, dans lequel la demande est envoyée au serveur de fichiers (160) avant la défaillance du disque dur.

8. Procédé (300) de génération d'un disque dur de remplacement pour un dispositif informatique comprenant :
la sauvegarde des données sur le dispositif informatique (305) sur un serveur sur un réseau ; le diagnostic d'une indication de défaillance possible de disque dur sur le dispositif informatique ;
la demande par le dispositif informatique (310) d'un disque dur de remplacement incluant les données sauvegardées sur le serveur
avant la défaillance du disque dur, si les diagnostics indiquent une défaillance possible de disque dur et
la réception en provenance du serveur et la restauration sur le disque dur de remplacement des fichiers modifiés depuis la création d'une image du disque dur de remplacement avec les données de sauvegarde.

9. Procédé selon la revendication 8, comprenant en outre la préautorisation d'au moins un disque dur de remplacement sous garantie, d'un contrat de service commercial, d'un disque dur de remplacement ou de l'achat d'un disque dur de remplacement, avant de diagnostiquer une indication d'une défaillance possible de disque dur.

10. Procédé selon la revendication 9, comprenant en outre la préautorisation d'un système d'exploitation mis à niveau (303) à installer sur le disque dur de remplacement.

11. Procédé selon la revendication 9, comprenant en outre des applications de préautorisation (304) à installer sur le disque dur de remplacement.

12. Support lisible par ordinateur non transitoire (550) comprenant un code qui, s'il est exécuté par un processeur dans un dispositif informatique, amène le processeur à :
sauvegarder des données stockées sur un disque dur du dispositif informatique sur un serveur sur un réseau au moyen d'une interface réseau ;
diagnostiquer une indication d'une défaillance possible de disque dur ;
demander, si les diagnostics indiquent une défaillance possible de disque dur, un disque dur de remplacement incluant les données sauvegardées sur le serveur avant la défaillance du disque dur et
recevoir en provenance du serveur et restaurer sur le disque dur de remplacement les fichiers modifiés depuis la création d'une image du disque dur de remplacement avec les données de sauvegarde.

13. Support lisible par ordinateur selon la revendication 12, comprenant en outre un code qui, s'il est exécuté, amène un dispositif informatique à :
préautoriser au moins un disque dur de remplacement sous garantie, un disque dur de remplacement dans le cadre d'un contrat de service commercial et l'achat d'un disque dur de remplacement avant de diagnostiquer une indication d'une défaillance possible de disque dur.
